# EUROPEAN PATENT SPECIFICATION

(11) **EP 3 774 373 B1**
(45) Date of publication and mention of the grant of the patent: **07.06.2023**
(21) Application number: 19716229.0
(22) Date of filing: 28.03.2019
(51) Int. Cl.: B42D 25/324, B42D 25/351, B42D 25/364, B42D 25/373, B42D 25/29, B42D 25/425, B42D 25/45

(54) **OPTICAL DEVICE AND METHOD OF MANUFACTURE THEREOF**
OPTISCHE VORRICHTUNG UND VERFAHREN ZUR HERSTELLUNG DAVON
DISPOSITIF OPTIQUE ET SON PROCÉDÉ DE FABRICATION

(30) Priority: 28.03.2018 GB 201805055
(43) Date of publication of application: 17.02.2021
(73) Proprietor: De La Rue International Limited, Basingstoke, Hampshire RG22 4BS (GB)
(72) Inventor: GODFREY, John, Basingstoke Hampshire RG21 7UQ (GB)
(74) Representative: Gill Jennings & Every LLP
(86) International application number: PCT/GB2019/050884
(87) International publication number: WO 2019/186165

(56) References cited:
- EP-A1- 3 287 294
- EP-A2- 1 888 349
- EP-A2- 2 161 598
- WO-A1-2013/022699
- WO-A1-2015/172190

## Description

### FIELD OF THE INVENTION

The present invention relates to optical devices which exhibit one or more images when illuminated with light. Optical devices have a wide range of applications, including decorative uses. A particularly preferred form of optical device to which the invention can be applied is a security device. Security devices are used for example on documents of value such as banknotes, cheques, passports, identity cards, certificates of authenticity, fiscal stamps and other secure documents, in order to confirm their authenticity. Methods of manufacturing optical devices are also disclosed.

Optical devices of the sorts disclosed herein find application in many industries. For example, decorative optical devices having a purely aesthetic function may be applied to packaging to enhance its appearance, or similarly to articles such as mobile phone covers, greetings cards, badges, stickers and the like.

Devices in accordance with the invention find particular utility however in the field of security devices.

### BACKGROUND TO THE INVENTION

Articles of value, and particularly documents of value such as banknotes, cheques, passports, identification documents, certificates and licences, are frequently the target of counterfeiters and persons wishing to make fraudulent copies thereof and/or changes to any data contained therein. Typically such objects are provided with a number of visible security devices for checking the authenticity of the object. By "security device" we mean a feature which it is not possible to reproduce accurately by taking a visible light copy, e.g. through the use of standardly available photocopying or scanning equipment. Examples include features based on one or more patterns such as microtext, fine line patterns, latent images, venetian blind devices, lenticular devices, moiré interference devices and moiré magnification devices, each of which generates a secure visual effect. Other known security devices include holograms, watermarks, embossings, perforations and the use of colour-shifting or luminescent / fluorescent inks. Common to all such devices is that the visual effect exhibited by the device is extremely difficult, or impossible, to copy using available reproduction techniques such as photocopying. Security devices exhibiting non-visible effects such as magnetic materials may also be employed.

One class of optical devices are those which produce an optically variable effect, meaning that the appearance of the device is different at different angles of view and/or illumination. Such devices are particularly effective as security devices since direct copies (e.g. photocopies) will not produce the optically variable effect and hence can be readily distinguished from genuine devices. Optically variable effects can be generated based on various different mechanisms, including holograms and other diffractive devices, moiré interference and other mechanisms relying on parallax such as venetian blind devices, and also devices which make use of focusing elements such as lenses, including moiré magnifier devices, integral imaging devices and so-called lenticular devices. One well-known type of optically variable device is one which uses a colour shifting material to produce an optically variable effect that is difficult to counterfeit. Such a colour shifting material generates a coloured appearance which changes dependent on the viewing angle. Examples of known colour shifting structures include photonic crystals, liquid crystals, interference pigments, pearlescent pigments, structured interference materials or thin film interference structures including Bragg stacks.

New optical devices are constantly being sought in order to achieve more distinctive and recognisable optical effects and especially, in the field of security devices, to stay ahead of counterfeiters.

EP-A-2161598 discloses an optical device that comprises a textured surface coated with an interference film so as to exhibit a colour shift upon rotation.

EP-A-3287294 discloses a security device that utilises a light control layer and a colour shifting layer, with "indexing out" of regions of the light control layer being used to control the exhibited optical effect.

WO2015/172190 teaches a hybrid security device comprising microstructures for first and second optically variable devices, wherein the heights of the microstructures differ. The microstructures may be interspersed or mutually interlaced.

EP-A-1888349 and WO2013/022699 are further examples of security devices that utilise microstructures in order to generate optically variable effects.

### SUMMARY OF THE INVENTION

In accordance with a first aspect of the present invention there is provided an optical device as defined in claim 1.

The inventors have realised that they can utilise the inherent properties of the at least partially transparent microstructures in order to provide a striking optically variable effect. When utilised as a security device, this provides enhanced security and difficulty of counterfeiting.

Here the term "at least partially transparent" means that light is able to pass through the microstructures and that the colour shifting layer and its optically variable effect is visible through the microstructures. The term "at least partially transparent" includes "translucent".

When light incident upon the optical device impinges upon a microstructure, the microstructure exhibits two components: a dominant refractive component and a secondary specular reflection component. The refractive component modifies the angle of light incident to, and reflected from, the colour shifting layer and generates a first optically variable effect. This is a colour shifting effect such that different colours are exhibited to a viewer at different viewing angles. Typically this first optically variable effect is exhibited when the device is tilted about an axis substantially parallel with the plane of the device relative to an observer.

The refractive component of the microstructures provides a modified colour shifting effect as compared to the colour shifting layer in isolation. Due to refraction of incident light at the surface of the microstructures, the angle of incidence of light onto the colour shifting layer is modified, such that, at least at one viewing angle of the device, regions with microstructures and regions void of microstructures will exhibit different colours.

This may provide a striking visual effect in itself. However, the inventors have utilised the secondary reflective component of the microstructures in the present invention. The microstructures of the first and second arrays have at least one face that reflects incident light. Here, the at least one face reflects light incident upon the device in a substantially specular manner. This specular reflection component creates a mirror-like effect such that the area of the microstructures from which incident light is reflected appears brighter than the surroundings. The angle at which this occurs (i.e. the viewing direction along which the device is viewed) depends upon the angle of incidence of light at the surface of the microstructures.

The microstructures of the first array are configured such that, when viewed along a first viewing direction the optical device exhibits the first image, and microstructures of the second array are configured such that, when viewed along a second viewing direction the optical device exhibits the second image.

In other words, at a first viewing direction, the microstructures of the first array appear bright to the observer and at a second viewing direction different to the first viewing direction the microstructures of the second array appear bright to the observer. In general the "viewing direction" comprises (e.g. may be defined by) components of tilt angle and rotation angle of the device. In other words, the viewing direction is typically varied by changing the tilt angle and/or rotation angle of the device. Herein, viewing the device along a viewing direction may be referred to as viewing the device at a particular viewing angle.

Therefore, when the device is viewed from the first viewing direction, the image elements of the first array appear bright and cooperate together to exhibit the first image, and when the device is viewed from the second viewing direction the image elements of the second array appear bright and together form the second image. In this manner, the optical device of the invention exhibits a striking "image switch" variable optical effect between first and second viewing directions. Furthermore, as described above, due to the at least partially transparent nature of the microstructures, the optically variable effect due to the colour shifting layer is also exhibited. The combination of these optically variable effects enhances the difficulty of counterfeit and therefore the security of the device.

Indeed, at first glance, it may not be apparent that the device exhibits the first and second images at the respective viewing directions, and as such provides a "hidden" image that is only revealed to an observer at a particular viewing direction.

Typically, each microstructure comprises at least one planar or curved face which makes a facet angle of more than zero degrees and less than or equal to 90 degrees with the plane of the colour shifting layer. These faces provide both the refractive and specular reflection components of the microstructures (i.e. said at least one planar or curved face reflects incident light). It will be appreciated that if the at least one face is planar, the whole face will make the same facet angle with the plane of the device, whereas if the at least one face is curved, the facet angle will vary between the base of the element and its top. Facet angles of less than 90 degrees are preferred, but angles of 90 degrees can produce the desired effect, given that the light source will typically be to the side of the device and hence the incident beam will strike a 90 degree facet at a glancing angle. One such planar or curved face to each microstructure is sufficient (for instance, any opposing face could have a facet angle which is greater than 90 degrees). However, it is preferred that each microstructure comprises at least two planar or curved faces each as defined above, opposing one another. In this way both faces can contribute to effect exhibited by the optical device. Further, one could be planar while the other is curved.

In preferred embodiments, the microstructures of the first and second arrays have different orientations in the plane of the device such that when viewed along the first viewing direction the optical device exhibits the first image and when viewed along the second viewing direction the optical device exhibits the second image. In other words the microstructures of the first and second arrays may be described as being "offset" from each other.

For ease of describing the offset of the microstructures of the first and second arrays, each microstructure may be seen to have a primary axis, with each microstructure of the first array having a primary axis orientated in a first direction lying in the plane of the optical device and each microstructure of the second array having a primary axis orientated in a second direction lying in the plane of the optical device, and wherein the first and second directions are offset. Each microstructure is typically elongate and preferably the primary axis is parallel to the direction of elongation. Preferably the first and second directions of the primary axes of the first and second arrays define an angle greater than 0 degrees and less than 180 degrees, preferably 90 degrees. In other words the angle between the first and second directions is greater than 0 degrees and less than 180 degrees, preferably 90 degrees. This offset of the orientation of the primary axes (and therefore orientation of the microstructures of the first and second arrays) means that the specular reflection components of the microstructures in the arrays will exhibit at different viewing directions.

In preferred embodiments, the microstructures (e.g. of at least one of the arrays) are prisms and preferably have a cross-section which is a triangle, a trapezium, an arch, a circular segment or an elliptical segment. Such prisms are preferably elongate and have a primary axis parallel to the direction of elongation. In the case of elongate microprisms, the faces parallel to the primary axis make up the majority of the surface area of the microstructures where light may be refracted and/or reflected, and as such the end faces of the prisms have a negligible contribution to the effects exhibited by the optical device. As a result, the first and second viewing directions are typically substantially perpendicular to the primary axes of the microstructures of the respective arrays. Herein, the viewing directions being substantially perpendicular to respective the primary axes of the arrays means that the projection of the first viewing direction onto the plane of the device is substantially perpendicular to the primary axes. In other words, an observer sees the specular reflection effect of the prisms when viewing substantially perpendicularly to the elongate faces of the prisms. Preferably, each microstructure is symmetrical about its primary axis.

The facet angle of such microprisms may be constant (e.g. in the case of a triangular cross-section with planar facets), or may continuously vary between the base of the microprism and its top (e.g. in the case of a circular cross-section).

In alternative preferred embodiments, the microstructures (e.g. of at least one of the arrays) may be pyramids (truncated or not truncated) with straight-edged bases - e.g. triangular, square, rectangular or hexagonal bases. In this case, specular reflection may be exhibited at more than one viewing direction for each array, rather than substantially one direction as in the case for elongate microstructures as described above. In other words, the first and/or second image may be viewed along more than one viewing direction. It should be noted that in all cases, the shapes mentioned need not be regular versions of those shapes. For example, prisms with an irregular triangle cross-section could be used, such as may form a sawtooth structure in combination. In such cases the microstructures would be asymmetric about their primary axes. Further, the faces of the elements may not be perfectly flat or may not follow a precise curve, depending on the manufacturing process used. For instance, if the elements are formed by printing, while overall their surface will follow the preferences indicated above, on a smaller scale it may be somewhat irregular. In the case of microstructures where specular reflection is exhibited for more than one viewing direction, such microstructures may be described as having more than one primary axis.

Preferably, the microstructures within an array have a pitch (e.g. the width of a microprism) in the range of 1-100µm, preferably in the range of 5-70µm. The microstructures may or may not abut one another. Preferably, each microstructure has a height in the range of 1-100µm, preferably in the range of 5-40µm.

Typically, the microstructures have a refractive index different from any material in contact with the microstructures. Depending on the construction of the optical device the microstructures might be exposed to air (in which case the elements will automatically have a different refractive index) or may be in contact with another material, such as a protective coating, in which case it is necessary to ensure that the refractive indexes are sufficiently different so as not to "index out" the microstructures. For instance, a refractive index difference of at least 0.3 is preferred. Typical values of the refractive index of the microstructures are in the range of 1.3 to 1.7, preferably 1.4 to 1.6.

Preferably, the microstructures within an array are substantially identical, i.e. have the same refractive and reflective characteristics. However, it will be appreciated that at the perimeter of an image element, the microstructures will curtailed and so their footprint (length, for instance), may vary from one element to another.

In preferred embodiments, the microstructures of the first array and the microstructures of the second array are substantially identical. This aids the manufacturing process. For example, the microstructures of the both the first and second arrays may be substantially identical elongate microprisms, with the direction of orientation of the microstructures differing between the arrays. However, in alternative embodiments, the microstructures of the first array and the microstructures of the second array are different through at least one of: (a) facet angle; (b) dimension; (c) shape, and; (d) refractive index. Control of these characteristics allows control of the viewing directions at which the image of a respective array is exhibited to an observer. For example, the microstructures of the first and second arrays may be elongate microprisms, but the facet angle of the first array may differ from the facet angle of the second array. In such embodiments, it is envisaged that the microstructures of the first and second arrays may have substantially the same orientation within the plane of the device, with the facet angles of the microstructures of the first array being different to the facet angles of the microstructures of the second array. In such an embodiment, the first image will be exhibited at a first angle of tilt (i.e. along a first viewing direction) of the device, and the second image will be exhibited at a second, different, angle of tilt of the device (i.e. along a second viewing direction). Similarly, the height of the microstructures (e.g. prisms) of the arrays may vary.

In some embodiments, the shape of the microstructures of the first and second arrays may vary - for example the microstructures of the first array may be elongate prisms and the microstructures of the second array may be pyramidal structures.

In some preferred embodiments, the microstructures of the first array may be configured such that the first image is exhibited when the device is viewed along the first viewing direction, and the microstructures of the second array may be configured such that the second image is exhibited when the device is viewed along said first viewing direction and along the second viewing direction. In such embodiments, the microstructures of the first array typically have a face that reflects incident light along the first viewing direction, and the microstructures of the second array have two (or more) faces that reflect incident light along the first viewing direction and along the second viewing direction. For example, the microstructures of the first array may be (preferably elongate) microprisms and the microstructures of the second array may be pyramidal structures. The microstructures of the first and second arrays are arranged as respective sets of image elements that combine to form the respective first and second images.

Such embodiments may provide complex optically variable effects if the first and second images complement each other; for example the first image may complete, combine with or extend the second image, or vice-versa. For example, when viewing along the second viewing direction, only the second image is exhibited, whereas when viewing along the first viewing direction both the first and second images are exhibited, which first and second images may combine to form a further image. This is particularly striking if the second image is recognisable within the further image (e.g. the second image may be in the form of the digit "3" and the first image may be the mirror image of the digit "3" such that the further image is perceived as the digit "8").

Preferably, in such embodiments the microstructures of the first and second (or more) arrays have face(s) that exhibit specular reflection when the device is viewed along a common viewing direction, and face(s) that exhibit specular reflection with the device is viewed along different viewing directions.

Further complex effects may be generated by using three or more arrays, and/or microstructures that have a plurality of faces that exhibit specular reflection along more than one viewing direction.

Preferably, each image element of the first array of microstructures is not discernible to the naked human eye, and each image element of the second array of microstructures is not discernible to the naked human eye. That is, the image elements are not visible to the human eye without the use of magnification means. It is generally accepted that the naked human eye cannot perceive dimensions less than 150µm (e.g. at typical viewing distances of the optical device of between 200mm and 300mm). Therefore, each image element has a dimension less than 150µm, preferably less than 100µm and more preferably less than 70µm. The image elements are typically in the form of elongate strips, and therefore this dimension may be a width of the strip. The elongate strips may be substantially linear (e.g. substantially rectangular) or may be curved. In general, the image elements have a geometry that allows for interlacing of the image strips of the first and second arrays.

In the case of the image elements being arranged as elongate strips, the first and second image elements are typically interlaced along a first direction that is perpendicular to the direction of elongation of the strips. In alternative embodiments to such "one dimensional" interlacing, the image elements may be arranged in a grid pattern, such that the image elements of the first array are interlaced with the image elements of the second array along two (preferably orthogonal) directions. Each image element in such a grid arrangement preferably has a dimension such that it is not discernible to the naked human eye.

Typically, in at least one of the first and second arrays, each image element is substantially one microstructure in width. In other words, the microstructures of the first and second arrays are interlaced so as to define the interlaced image elements. This is particularly preferable when the image elements are arranged as elongate strips.

The expression "colour shifting layer" is used to refer to any material or structure which can selectively reflect or transmit incident light to create an optically variable effect, in particular an angularly dependent coloured reflection or transmission. Examples of such a colour shifting layer include photonic crystals, liquid crystals, interference pigments, pearlescent pigments, structured interference materials or thin film interference structures including Bragg stacks and Fabry-Perot stacks. In the case where a colour shifting layer or structure comprises individual layers, (e.g. an absorber layer, dielectric layer and reflective layer), for the purposes of this description, such a structure is referred to as a "colour shifting layer".

In general the colour shifting layer may be substantially opaque or partially transparent. A partially transparent colour shifting element (for example a layer of cholesteric liquid crystal material) transmits at least some of the light that is incident upon it as well as providing an optical effect in reflection. An example of a substantially opaque colour shifting layer is an optically variable pigment. Optically variable pigments having a colour shift between two distinct colours, with the colour shift being dependent on the viewing angle, are well known. The production of these pigments, their use and their characteristic features are described in, *inter-alia,* US-B-4434010, US-B-5059245, US-B-5084351, US-B-5135812, US-B-5171363, US-B-5571624, EP-A-0341002, EP-A-0736073, EP-A-668329, EP-A-0741170 and EP-A-1114102. Optically variable pigments having a viewing angle-dependent shift of colour are based on a stack of superposed thin-film layers with different optical characteristics. The hue, the amount of colour shifting and the chromaticity of such thin-film structures depend *inter alia* on the material constituting the layers, the sequence and the number of layers, the layer thickness, as well as on the production process. Generally, optically variable pigments comprise an opaque totally reflecting layer, a dielectric layer of a low refractive index material (i.e. with an index of refraction of 1.65 or less) deposited on top of the opaque layer and a semi-transparent partially reflecting layer applied on the dielectric layer.

When viewed along a first viewing direction the optical device exhibits a first image and when viewed along a second viewing direction the optical device exhibits a second image due to the specular reflection properties of the microstructures. This change in appearance provides a memorable "image switch" effect, which may be aesthetically pleasing as well as improving the difficulty of counterfeiting in the case of security devices. The first and second images may be arranged to provide an animation effect when changing from the first viewing direction to the second viewing direction, particularly if the first and second images are thematically linked (e.g. changing size of a geometrical shape).

In embodiments, the optical device may further comprise at least a third array of microstructures arranged as a set of image elements that cooperate to exhibit at least a third image, wherein; the microstructures of the at least third array have at least one face that reflects incident light, whereby the microstructures of the at least third array are configured such that, when viewed along an at least third viewing direction the optical device exhibits the at least third image.

The first, second and at least third viewing directions are different to each other.

It is envisaged that more than three such arrays of microstructures may be used. The use of three or more arrays allows for complex visual effects to be exhibited by the device - for example animation effects with smoother transitions between frames as the viewing direction changes - thereby improving both the aesthetic appearance of the device and the difficulty of counterfeiting.

Typically, the microstructures of the first, second and at least third arrays have different orientations in the plane of the device.

In the same manner as has been described above, each image element of the at least third array is not discernible to the naked human eye, and thus preferably has dimension less than 150µm, preferably less than 100µm and more preferably less than 70µm.

The image elements of the at least third array are interleaved with the image elements of the first and second arrays. The image elements of the at least three arrays may be arranged as elongate strips. In other embodiments the image elements of the at least three arrays may be arranged in a grid pattern, such that the image elements of the at least three arrays are interlaced along two (preferably orthogonal) directions.

Typically, at least one of the first and second images (or more images) defines indicia, preferably a letter, digit, geometric shape, symbol, graphic or alphanumerical text.

The optical device is preferably a security device but could alternatively be configured for use in other fields, such as decorative uses e.g. on packaging or advertising.

In accordance with a second aspect of the invention there is provided a security article comprising an optical device as described above, wherein the security article is preferably formed as a security thread, strip, foil, insert, label, patch or a substrate for a security document. Such a substrate may be a polymer (typically polycarbonate, polyethylene terephthalate (PET) or polyethylene terephthalate glycol-modified (PETG)) security sheet for a passport for example, or may comprise a substrate for an identity card. In the case where the security article is formed as such a substrate, this beneficially allows for ease of personalisation of the final security document, and improves security of the document as the security device is integrated into the document itself.

In accordance with a third aspect of the invention there is provided a security document comprising an optical device or a security article each as described above. Preferably, the security document is formed as a banknote, cheque, passport, identity card, certificate of authenticity, fiscal stamp or another document for securing value or personal identity. The security document may comprise a substrate with a transparent window portion and the optical device is located at least partially within the transparent window portion. For instance, the security document could comprise a translucent or opaque document substrate, made for example of paper or a paper/polymer multilayer construction, and include a window region in which the substrate is absent so as to reveal therein a security article such as a thread or strip on which the optical device is carried. Alternatively, the security document could comprise a transparent document substrate, e.g. a polymer banknote or a plastic ID document such as a passport, a portion of which is left substantially uncovered by opacifying materials to form a window region. The optical device could be formed directly on the transparent document substrate.

The security document may comprise a substrate wherein the device is integrated into the substrate. For example, the security document may be a passport containing a polycarbonate security sheet in which the device is integrated; the security sheet of the finished passport having personal information associated with the holder printed onto it.

In accordance with a fourth aspect of the invention there is provided a method of forming an optical device as defined in claim 15.

Thus, the method of the fourth aspect of the invention results in an optical device of the sort already described above, and with the associated advantages.

Preferably, the first and second arrays of microstructures are provided by one of embossing, stamping or cast-curing. Embossing typically involves stamping a die carrying the desired surface relief structure (defining the first and second arrays of microstructures) in its surface into a material suitable for use as the elements, such as a thermoplastic polymer. Optionally this may be carried out at an increased temperature to promote forming of the material. Cast curing involves applying a curable material, such as a UV curable material, either to a substrate which is then brought into contact with a die carrying the desired surface relief, or directly to such a die which is then brought into contact with a substrate, and at least partially curing the material while it is in contact with the die. The substrate is then separated from the die with the formed material affixed thereto, and optionally cured further if necessary. In preferred embodiments the embossing or cast-cure die may constitute the surface of a roller (or a sheet conforming to the surface of a roller), to enable continuous production of the said microstructure arrays.

Suitable printing methods include intaglio printing or screen printing the microstructures, optionally using reticulation methods such as those described in WO-A-2013/167887. Forming the microstructures by printing may result in their surfaces being somewhat irregular, but good results can still be achieved. Particularly preferably, the first and second arrays are provided in a single process step. Alternatively the arrays may be provided separately and in appropriate register.

The arrays of microstructures may be formed directly onto the colour shifting layer, or onto a transparent substrate on an opposing side to the colour shifting layer. The arrays of microstructures may be formed onto a carrier substrate before being transferred to the colour shifting layer. An alternative is to laminate a substrate with the colourshifting layer to a substrate having the microstructures formed thereon.

Preferred features and advantages of the fourth aspect are as set out above for the first aspect of the invention.

Further, there is provided a method of manufacturing a security document comprising; manufacturing an optical device according to the fourth aspect, wherein the optical device is a security device, and; integrating the security device into a security document, wherein preferably the security document is formed as a banknote, cheque, passport, identity card, certificate of authenticity, fiscal stamp or another document for securing value or personal identity.

Further, there is provided an optical device (preferably a security device), comprising; a colour shifting layer that exhibits different colours dependent on the angle of incidence of incident light, and; first and second arrays of at least partially transparent microstructures covering at least a part of the colour shifting layer and configured to modify the angle of light incident to, and reflected from, the colour shifting layer in order to generate a first optically variable effect, wherein; said first array of microstructures is arranged as a set of image elements that cooperate to exhibit a first image, wherein each image element is not discernible to the naked human eye and; said second array of microstructures is arranged as a set of image elements that cooperate to exhibit a second image, wherein each image element is not discernible to the naked human eye, wherein; the image elements of the first array are interlaced with the image elements of the second array, and further wherein; the microstructures of the first and second arrays have different orientations in the plane of the device such that at a first viewing direction the optical device exhibits the first image, and at a second viewing direction the optical device exhibits the second image.

Further, there is provided a method of forming an optical device (preferably a security device), comprising; providing a colour shifting layer that exhibits different colours dependent on the angle of incidence of incident light, and; providing first and second arrays of at least partially transparent microstructures covering at least a part of the colour shifting layer and configured to modify the angle of light incident to, and reflected from, the colour shifting layer in order to generate a first optically variable effect, wherein; said first array of microstructures is arranged as a set of image elements that cooperate to exhibit a first image, wherein each image element is not discernible to the naked human eye and; said second array of microstructures is arranged as a set of image elements that cooperate to exhibit a second image, wherein each image element is not discernible to the naked human eye, wherein; the image elements of the first array are interlaced with the image elements of the second array, and further wherein; the microstructures of the first and second arrays have different orientations in the plane of the device such that at a first viewing direction the optical device exhibits the first image, and at a second viewing direction the optical device exhibits the second image.

### BRIEF DESCRIPTION OF THE DRAWINGS

The invention will now be described with reference to the attached drawings, in which:
Figure 1 shows an exemplary optical device and denotes the directions and angles that will be used throughout the description;
Figures 2a and 2b are schematic cross-sectional diagrams through an exemplary optical device showing the microstructures of one array and the optical effects of the invention;
Figures 3a and 3b illustrate schematic plan views of a first microstructure array that may be used in the present invention;
Figures 4a and 4b illustrate schematic plan views of a second microstructure array that may be used in the present invention;
Figure 5 is a plan view of an optical device according to an embodiment of the invention;
Figures 6a and 6b illustrate the optical effect exhibited by the optical device seen in Figure 5 when viewed along first and second viewing directions;
Figures 7a to 7d schematically illustrates the interlacing of four microstructure arrays;
Figures 8a and 8b schematically illustrate interlacing of arrays along two dimensions that may be used in embodiments of the invention;
Figures 9a to 9f illustrate example microstructures that may be used in the invention;
Figure 10 schematically illustrates a device according to one embodiment of the invention using different microstructures in different arrays, and;
Figures 11a to 15b illustrate examples of incorporating an optical device according to the invention into a security document.

### DETAILED DESCRIPTION

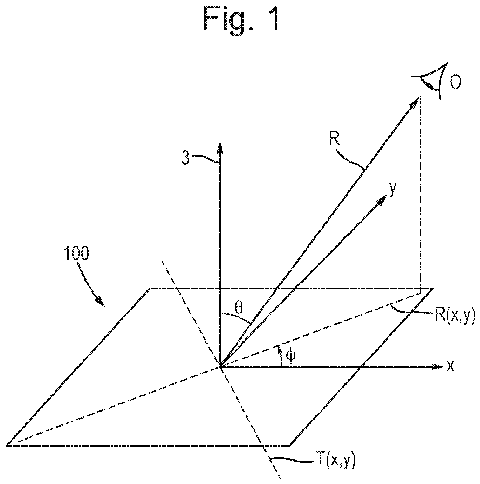

To aid understanding of the following description, Figure 1 shows an exemplary optical device 100 and denotes the directions and angles that will be referred to hereinafter. Figure 1 shows the optical device 100 in perspective view, illustrating it lying in the x-y plane with its normal lying parallel to the z axis.

A light beam R reflected from the optical device 100 lies in a plane (containing the z-axis) which intersects the x-y plane of the device along the line R(x,y). The "tilt" angle Θ between the reflected light beam R and the device normal can take any angle without the light beam R leaving that plane. The tilt angle is changed by the movement of device relative to the observer O. Typically this may be done by the observer remaining stationary and rotating ("tilting") the device about a tilt axis T(x,y) which lies within the plane of the device 100 and is perpendicular to the line R(x,y). For example, if an observer were to view the device 100 along a direction parallel to the x-axis, the tilt angle could be varied by rotating ("tilting") the device 100 about the y-axis.

The rotational angle Φ made between the line R(x,y) and the device orientation (defined here by the x-axis) defines the rotation of the device 100 within its plane (i.e. within the x-y plane in Figure 1). The viewing direction of an observer comprises (i.e. may be varied by changing) components of the tilt angle Θ and the rotational angle Φ. The observer O views the device along a viewing direction represented by R.

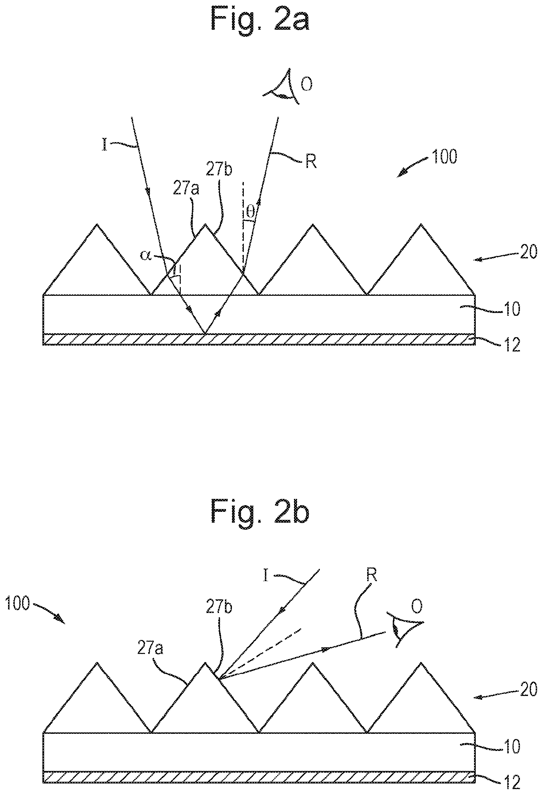

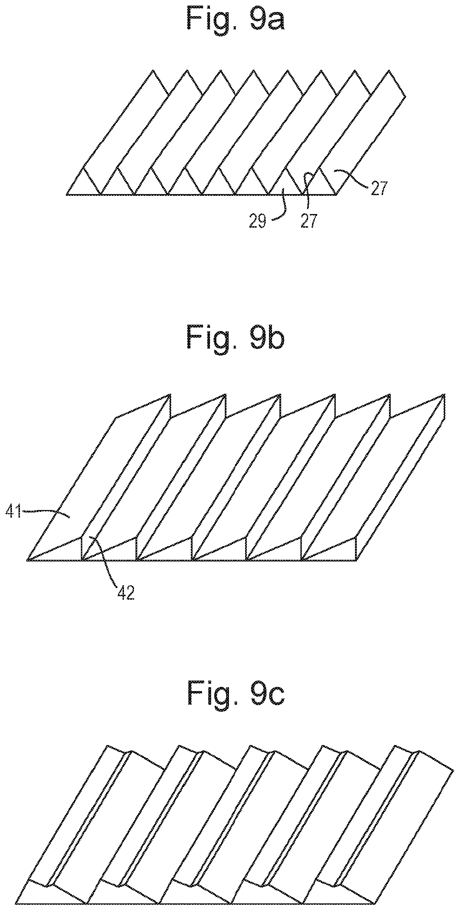

Figure 2a is a schematic cross-sectional diagram through an exemplary optical device 100 showing the microstructures of one array (generally shown at 20). Here the microstructures are linear triangular microprisms, with the long axes of the microprisms extending into the page in the view of Figure 2. A perspective view of such an array is shown in Figure 9a.

The array of microstructures is positioned on (here meaning either in contact with or simply above such that the microstructures and colour shifting layer are in optical communication) a colour shifting layer 10. All types of colour shifting materials and structures may be used as the colour shifting layer in the present invention, including *inter alia* photonic crystals, liquid crystals, interference pigments, pearlescent pigments, structured interference materials or thin film interference structures including Bragg stacks and Fabry-Perot stacks.

When incident light strikes the colour shifting layer 10, some of the light is reflected. The wavelength of the reflected light depends on the structure and composition of the colour shifting layer 10 and the reflected light will appear coloured to the observer O. The wavelength of the reflected light is also dependent on the angle of incidence α of light incident on the colour shifting layer, which results in a colour change perceived by the viewer 50 as the tilt angle Θ is changed.

In the present invention, the device 100 is designed to be viewed in reflection, and as such it is desirable to place an absorbing dark layer (shown at 12) beneath the colour shifting layer 10 in order to absorb any transmitted light such that the reflection effect dominates. This is particularly beneficial if the colour shifting layer is partially transparent to visible light (for example a cholesteric liquid crystal layer). If a substantially opaque colour shifting layer 10 (such as a printed ink comprising an optically variable pigment) is used, then such an absorbing layer is not required.

Figure 2a schematically illustrates the path of an incident light beam I passing through one of the substantially transparent microprisms and into the eye of an observer O. As can be seen, the incident light is refracted at the interface between the air and the angled microprism facet 27a, and as such the angle of incidence α of the incident light beam at the colour shifting layer 10 is modified (increased) as compared to if no microprisms were present. The light ray R reflected from the colour shifting layer is subsequently refracted at the interface between the microprism facet 27b and the air, and is viewed by the observer. In general, the effect of the microprisms is that the colour shift effects are observed closer to normal incidence viewing (i.e. smaller tilt angle Θ) compared to if no microprisms were present. Further, the presence of microprisms may allow for reflected light of shorter wavelength (which corresponds to greater tilt angles Θ) to be exhibited. For example, in the case of a red to green colour shifting layer, in the absence of microprisms, blue wavelength light is totally internally reflected at the colour shifting layer-air interface and not exhibited. In the presence of the microprisms, this total internal reflection does not occur, and thus blue light is exhibited at the corresponding tilt angle Θ.

Figure 2b schematically illustrates the specular reflection component of the array of microstructures 20. Light incident upon the device 100 (represented by light ray I) is reflected at facet 27b and is observed by the observer O. This specular reflection effect is observed when the device 100 is viewed along a particular viewing direction (dependent on the angle of incidence of light from the light source), which may be varied by tilting and/or rotating the device as discussed above.

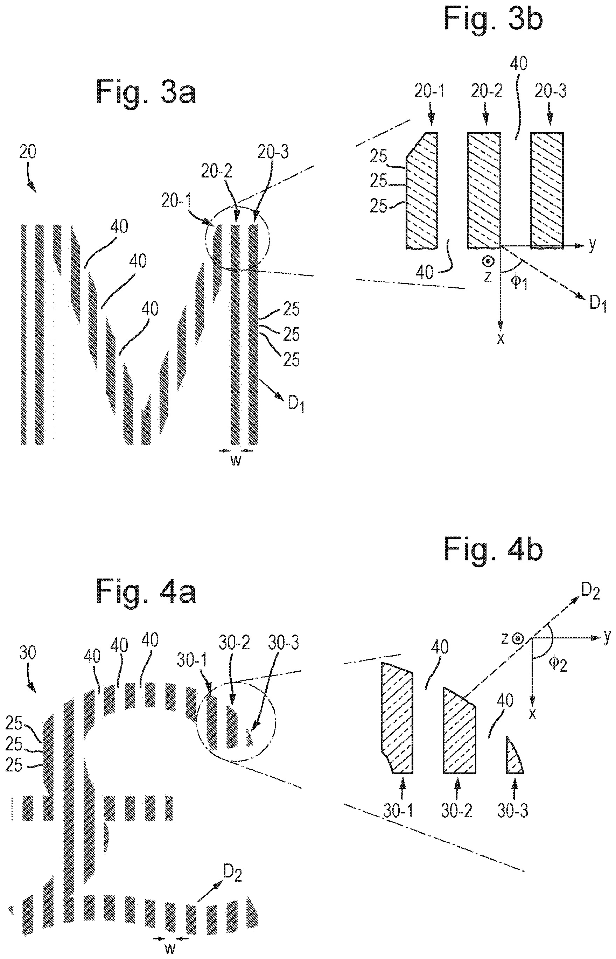

Figure 3a is a plan view of a first array 20 of linear microprisms 25 that may be used for a device according to the invention. The array 20 is arranged as a series of image elements (three are labelled for clarity purposes - 20-1, 20-2 and 20-3) that together form a first image, here in the form of the letter "M". In this example, each image element is in the form of a substantially linear image "strip", although other geometries of image elements are envisaged, such as curved image elements. The plan view of Figure 3a schematically illustrates the orientation of each microprism 25 of the first array, with each microprism having a primary axis orientated along a direction D1 (as explained below).

Figure 3b is an exploded plan view showing image elements 20-1, 20-2 and 20-3 in more detail. Each microprism 25 of the array has the same orientation within the plane of the device; in this case each microprism being orientated at an angle ϕ₁ to the x-axis. Each microprism 25 comprises two planar rectangular facets 27 angled with respect to the colour shifting layer, and opposing triangular end faces 29 (see Figure 9a). The solid lines in Figure 3b represent the peaks of each microprism and the dashed lines indicate where the microprism facets meet the colour shifting layer. The microprisms are each elongate along a length of the planar facets 27, and can be seen as having a primary axis orientated in this direction (shown as direction D₁ in Figure 3b). The direction D₁ makes angle ϕ₁ with the x-axis. In this example, the microprisms abut one another along the lengths of their facets (i.e. at the dashed lines in Figure 3b). The microprisms abutting each other advantageously increases the facet area of the array, and therefore the amount of specular reflection. However, in other embodiments the microprisms may not abut each other.

Figure 4a is a plan view of a second array 30 of linear microprisms 25. As with the first array, the second array 30 is arranged as a series of image elements that together form a second image, here in the form of the character "£". As with the first array, each image element is substantially linear here, although other geometries are envisaged. Three adjacent image elements 30-1, 30-2 and 30-3 are illustrated in magnified view in Figure 4b and, as can be seen, each linear microprism has a primary axis along a direction D₂ which makes an angle ϕ₂ with the x-axis. In this example, the microprisms of the first and second arrays are orientated perpendicularly to each other, such that ϕ₂ = ϕ₁ + 90°. However, in general the microprisms of the first and second arrays may be orientated at different angles with respect to each other, and the angle between the primary axes of the first and second arrays may be any angle between 0° and 180°.

In this example, each image element has a width w of 70µm such that each image element is not discernible to the naked human eye at typical viewing distance of the device of between 200 and 300mm. Similarly, each gap region 40 between adjacent image elements has a width of 70µm such that they are not discernible to the naked human eye. However, it will be appreciated that the image elements may have a width of any suitable dimension such that they are not discernible to the naked human eye. Typically, as in this example, each gap region 40 has the same width as the image elements for ease of interlacing arrays, although this is not essential.

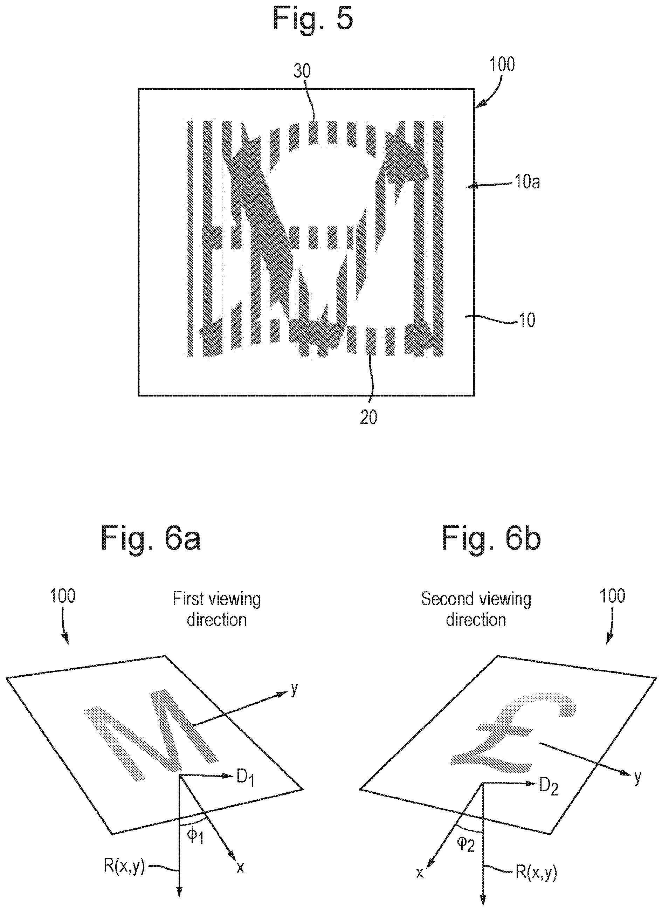

Figure 5 is a plan view of an optical device 100 according to an embodiment of the invention. The optical device 100 comprises a colour shifting layer 10, with the first and second arrays positioned so as to cover at least a part of the colour shifting layer. The image elements of the first 20 and second 30 arrays are interlaced with each other such that the arrays are interlaced.

In Figure 2a, the dominant refractive effect exhibited by the microprisms was discussed. The facets of the microprisms also have a secondary specular reflection component that creates a mirror-like effect such that the area from which the light is reflected appears brighter than its surroundings, as discussed above in relation to Figure 2b.

Figures 6a and 6b schematically illustrate the effect exhibited by the device 100 when viewed along first and second viewing directions (viewing at first and second viewing angles). In Figure 6a, the device is viewed along a first viewing direction and has been orientated with respect to the observer such that a light ray R incident on the observer from the device lies within a plane that intersects the device along the line R(x,y) which makes an angle Φ₁ with the x-axis. Here, the angle of rotation of the device Φ₁ is such that the observer views the device substantially perpendicularly to the primary axes of the microprisms of the first array 20, i.e. R(x,y) and D₁ are substantially perpendicular.

At a particular tilt angle Θ, the elongate facets 27 of the microprisms will appear brighter than their surroundings due to specular reflection. When viewed along this first viewing direction (defined by a combination of tilt angle Θ and rotation angle Φ), the bright image elements of the first array cooperate with each other to exhibit the letter "M".

In Figure 6b, the device 100 is viewed along a second viewing direction and has been orientated with respect to the observer such that a light ray R incident on the observer from the device lies within a plane that intersects the device along the line R(x,y) which makes an angle Φ₂ with the x-axis. Here the angle of rotation of the device Φ₂ is such that the observer views the device substantially perpendicularly to the primary axes of the microprisms of the second array 30, i.e. R(x,y) and D₂ are substantially perpendicular. At a particular tilt angle Θ, the elongate facets 27 of the microprisms of the second array will exhibit specular reflection and will appear brighter than their surroundings. The image elements of the second array cooperate with each other to exhibit the character "£" of the second array. The device therefore exhibits a memorable "image switch" effect as the viewing direction changes, in addition to the colour shift effect that is exhibited due to the colour shifting layer.

Due to the perpendicular orientation of the microprisms of the first and second arrays, the angles of rotation Φ₁ and Φ₂ of the first and second viewing directions will be substantially perpendicular. However, as discussed above, the first and second arrays may be orientated at different relative angles to each other. The amount of rotation of the device required to exhibit the switching effect is controlled by the relative orientations of the first and second arrays.

It will be appreciated that the above description is slightly idealised for clarity of explanation. Although the brightest specular reflection from an array will be exhibited when the device is observed substantially perpendicularly to the primary axes of the microprisms of that array, there will be specular reflection from the array when viewed off this axis (i.e. viewed non-perpendicular to the primary axes of the array microprisms). During rotation of the device (i.e. change in rotation angle Φ), the amount of reflection from one array will reduce, and the reflection from the other array will dominate, leading to the image switch effect.

As shown in Figure 5, the first and second arrays 20, 30 cover a part of the colour shifting layer 10, such that there is a region (shown generally at 10a) that is not covered by microstructures. As has been explained above, the colour shifting effect exhibited by the region 10a void of microstructures will differ from the colour shifting effect exhibited by the region where the microstructure arrays are located. For example, when the device is viewed along at least one viewing direction, the colours exhibited by the region 10a void of microstructures and the region where microstructures are present will differ. This difference in exhibited effect due to the presence of microstructures, in addition to the specular reflection effects, provides a memorable effect to the observer and increases the difficulty of counterfeiting the device.

In the example embodiment of Figures 3 to 6, the microprisms of the first and second arrays are substantially identical and as such have the same facet angle at the surface of the colour shifting layer. The specular reflection of the first and second arrays will consequently be exhibited at substantially the same tilt angle Θ (with different rotation angles Φ). However, in other embodiments, the microprisms of the first array may differ from the microprisms of the second array through one or more of facet angle, shape, dimension and refractive index. One or more of these features may be varied in order to control the tilt angle at which the specular reflection effect is exhibited by a respective array.

The example embodiment described above in relation to Figure 3 to 6 describes a striking "image switch" effect between two images, with a relatively large amount of change in viewing direction required to display the image switch. It is envisaged that three or more arrays may be interlaced and configured to exhibit an animation effect upon a change in viewing direction. As the number of arrays (images) in the device increases, the amount of change in the viewing direction in order to exhibit each array necessarily decreases, thus providing for a smooth transition between images.

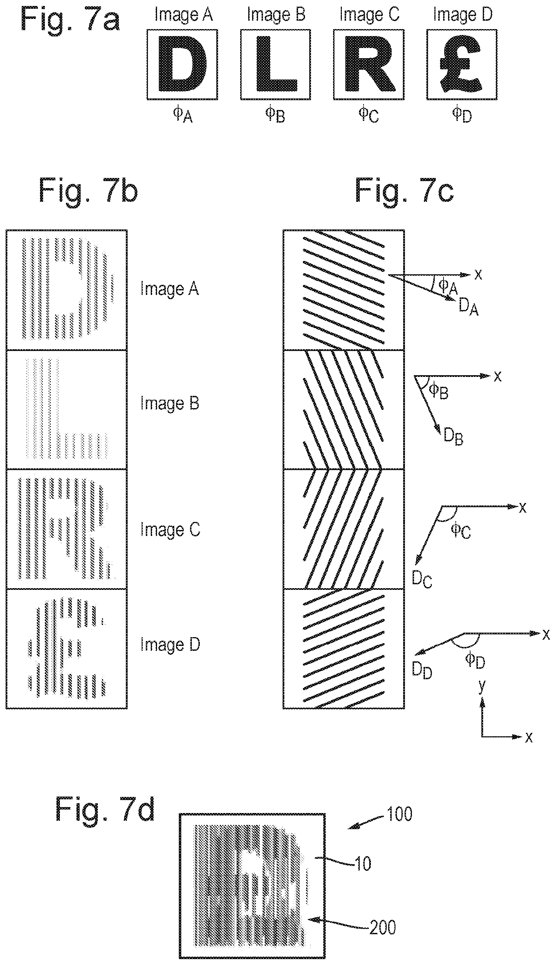

Figures 7a to 7d schematically illustrate the interlacing of four arrays which gives rise to a device 100 that exhibits four images A, B, C and D when viewed at respective rotation angles Φ_{A}, Φ_{B}, Φ_{C} and Φ_{D}, as seen in Figure 7a. In order to form the respective microstructure arrays, each image is split into image elements as seen in Figure 7b. As with the previous example, each image element is an elongate strip, although other geometries are envisaged. Each individual image element is not discernible to the naked human eye.

First to fourth arrays of microprisms are arranged in accordance with the image elements of the respective image, with the orientations of the microprisms differing for each array. This is shown in Figure 7c, which schematically illustrates the orientations of the prisms in each array, where the directions of the primary axes for each array (D_{A}, D_{B}, D_{C}, D_{D}) corresponding to the respective images A, B, C and D are also shown. The prisms of the array corresponding to Image A have a primary axis making an angle ϕ_{A} of 22.5 degrees with the x axis; the prisms of the array corresponding to Image B have a primary axis making an angle ϕ_{B} of 67.5 degrees with the x axis; the prisms of the array corresponding to Image C have a primary axis making an angle cpc of 112.5 degrees with the x axis, and the prisms of the array corresponding to Image D have a primary axis making an angle ϕ_{D} of 157.5 degrees with the x axis.

Thus the orientations of the arrays are equally spaced (by 45 degrees), and as the observer rotates the device, they observe an image change from Image A to Image B to Image C to Image D, thereby providing a striking optically variable effect that is easy to authenticate and yet difficult to counterfeit.

Figure 7d illustrates a plan view of the device 100 comprising a colour shifting layer 10 and the four interlaced arrays of microprisms (shown generally at 200). Typically the arrangement of the interlaced image strips will be ABCDABCD... Image A will be most readily observed (i.e. most specular reflection) when the device is viewed at a rotation angle such that the observer views the device substantially perpendicularly to the direction D_{A}. Similarly, Image B will be most readily observed when the observer views the device substantially perpendicularly to the direction D_{B}; Image C will be most readily observed when the observer views the device substantially perpendicularly to the direction Dc, and Image D will be most readily observed when the observer views the device substantially perpendicularly to the direction D_{D}.

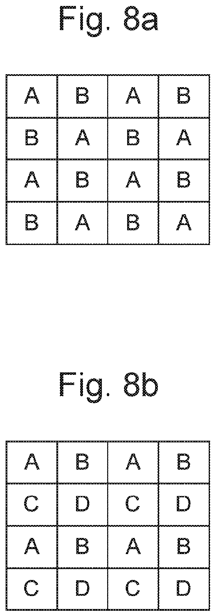

In the examples described so far, the image elements have been in the form of elongate image strips that have been interlaced along one direction (perpendicular to the direction of elongation of the image strips). For example, as described above, the arrangement of the interlaced image strips of the device shown in Figure 7d is ABCDABCD... In other embodiments, the image elements may be arranged in the form of a grid pattern giving rise to two dimensional interlacing. Such arrangements are illustrated in Figures 8a and 8b, which schematically show arrangements of the arrays of microstructures that may be used in embodiments of the invention. In Figure 8a, image elements defining two images (labelled "A" and "B") have substantially square geometry and are arranged in a grid pattern such that they are interlaced in two dimensions. Figure 8b schematically illustrates an arrangement of microstructures of a device that exhibits four different images (labelled "A", "B", "C" and "D"), where the image elements are arranged in a grid pattern and the interlacing is in two dimensions.

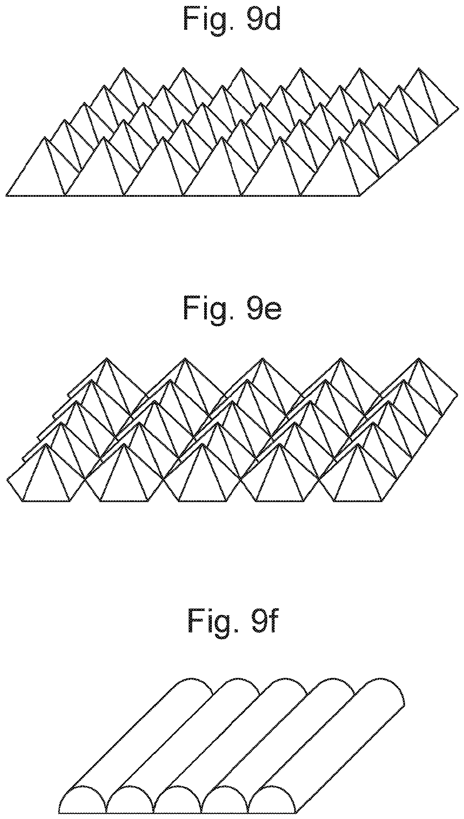

The above figures have been described with reference to the microstructures being microprisms having a symmetrical triangular cross-section. Figure 9a shows a perspective view of a portion of such an array of microprisms. Other microstructure geometries are envisaged however, for example as seen in Figures 9b to 9f. Figure 9b illustrates a portion of an array comprising a plurality of microprisms each having a "saw-tooth" structure, in that one facet (shown here at 41) defines a more acute angle with the colour shifting layer than the opposing facet 42. Multi-faceted microprisms (i.e. having more than two facets) may be used, as in the portion of the array shown in Figure 9c. A lenticular array having a curved surface structure may be used, as illustrated at Figure 9f.

The above examples may be seen as "one dimensional" microstructures in that the refractive and specular reflection effects are primarily observed in one rotational viewing direction with respect to an individual microstructure (typically perpendicular to its long axis). However, arrays of "two dimensional" microstructures are also envisaged where the optical effects (particularly specular reflection) due to the presence of the microstructures are readily observed at two or more rotational viewing directions, due to such structures having facets along more than one axis that make a facet angle of less than 90° with the plane of the colour shifting layer. Examples of such two-dimensional microstructures include square based pyramids as seen in Figure 9d, and hexagonal based pyramids, as illustrated in Figure 9e.

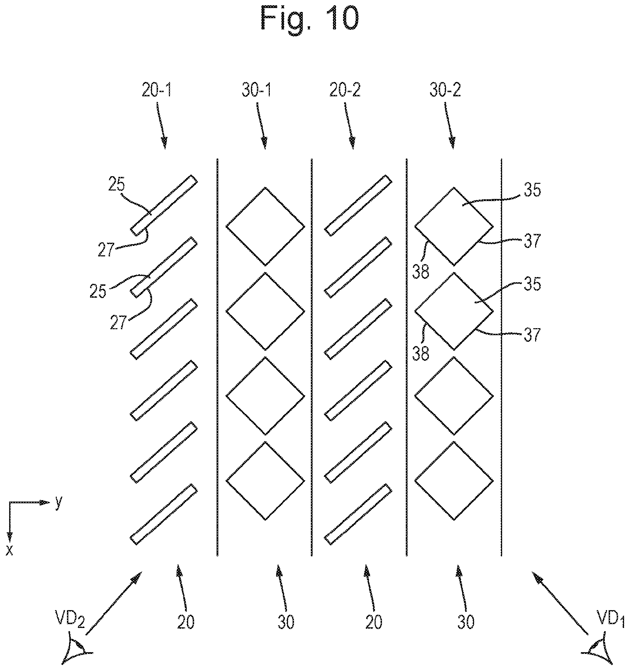

Figure 10 schematically illustrates a plan view of a device 100 according to an embodiment of the invention comprising a combination of "one dimensional" and "two dimensional" microstructures. Here the device 100 comprises a first array 20 of "one dimensional" linear microprisms arranged as a series of elongate image elements 20-1, 20-2; and a second array 30 of "two dimensional" square based pyramids 35 arranged as a series of elongate image elements 30-1, 30-2. The arrays are interlaced with each other along a direction perpendicular to the direction of elongation of the image elements (here interlaced along the y-axis). The image segments of the first array 20 together define a first image, and the image segments of the second array 30 together define a second image. It will be appreciated that the representation of Figure 10 is schematic only, and represents a portion of the device. The vertical lines between the image elements are shown for clarity of illustration.

The linear microprisms 25 are aligned at 45 degrees to the x-axis such that when the device is viewed along a first viewing direction VD₁, the facets 27 of the microprisms reflect incident light, and the microprisms 25 of the first array appear bright such that the first image is exhibited to the viewer.

The square-based pyramids 35 comprise facets 37, 38 that exhibit specular reflection when the device is viewed along two (here substantially orthogonal) viewing directions. The facets 37 of the pyramids have the same orientation and facet angle as the facets 27 of the microprisms, such that when the device is viewed along the first viewing direction VD₁, both the first and second images are exhibited. When the device is viewed along the second viewing direction VD₂, facets 38 of the pyramids 35 exhibit specular reflection and thus only the second image is exhibited (the "end faces" of the elongate microprisms 25 provide a negligible effect when viewing along this viewing direction). Such devices allow for complex optically variable effects to be exhibited, which are particularly advantageous when the optical device is used as a security device as this increases the difficulty of counterfeiting For example, the array 30 may define an image in the form the digit "3", which is exhibited when viewing the device along the second viewing direction VD₂. If the array 20 of linear microprisms then defines an image in the form of the mirror image of the digit "3", when viewing along the first viewing direction VD₁, the two images will combine to form the digit "8".

Even more complex effects may be generated by using "two dimensional" microstructures that exhibit optical effects at more than two rotational viewing directions (e.g. triangular-based pyramids or the hexagonal-based pyramids as in Figure 9e), or interlacing three or more arrays that are arranged in accordance with respective images.

In other embodiments, "two dimensional" microstructures may comprise one facet having a larger area than the other "minor" facets such that reflections from the "minor" facets would not substantially affect an image exhibited due to specular reflection from the facet having the larger area.

Optical devices of the sort described above, in the form of security devices, can be incorporated into or applied to any article for which an authenticity check is desirable. In particular, such devices may be applied to or incorporated into documents of value such as banknotes, passports, driving licences, cheques, identification cards etc.

The security device or article can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0860298 and WO-A-03095188 describe different approaches for the embedding of wider partially exposed threads into a paper substrate. Wide threads, typically having a width of 2 to 6mm, are particularly useful as the additional exposed thread surface area allows for better use of optically variable devices, such as that presently disclosed.

The security device or article may be subsequently incorporated into a paper or polymer base substrate so that it is viewable from both sides of the finished security substrate. Methods of incorporating security elements in such a manner are described in EP-A-1141480 and WO-A-03054297. In the method described in EP-A-1141480, one side of the security element is wholly exposed at one surface of the substrate in which it is partially embedded, and partially exposed in windows at the other surface of the substrate.

Base substrates suitable for making security substrates for security documents may be formed from any conventional materials, including paper and polymer. Techniques are known in the art for forming substantially transparent regions in each of these types of substrate. For example, WO-A-8300659 describes a polymer banknote formed from a transparent substrate comprising an opacifying coating on both sides of the substrate. The opacifying coating is omitted in localised regions on both sides of the substrate to form a transparent region. In this case the transparent substrate can be an integral part of the security device or a separate security device can be applied to the transparent substrate of the document. WO-A-0039391 describes a method of making a transparent region in a paper substrate. Other methods for forming transparent regions in paper substrates are described in EP-A-723501, EP-A-724519, WO-A-03054297 and EP-A-1398174.

The security device may also be applied to one side of a paper substrate so that portions are located in an aperture formed in the paper substrate. An example of a method of producing such an aperture can be found in WO-A-03054297. An alternative method of incorporating a security element which is visible in apertures in one side of a paper substrate and wholly exposed on the other side of the paper substrate can be found in WO-A-2000/39391.

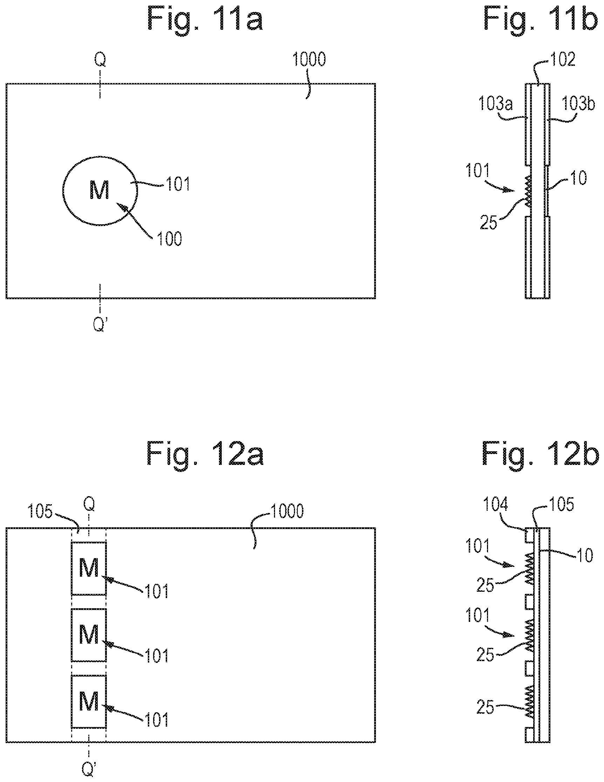

Examples of such documents of value and techniques for incorporating a security device will now be described with reference to Figures 11 to 15.

Figure 11 depicts an exemplary document of value 1000, here in the form of a banknote. Figure 11a shows the banknote in plan view whilst Figure 11b shows the same banknote in cross-section along the line Q-Q'. In this case, the banknote is a polymer (or hybrid polymer/paper) banknote, having a transparent substrate 102. Two opacifying layers 103a and 103b are applied to either side of the transparent substrate 102, which may take the form of opacifying coatings such as white ink, or could be paper layers laminated to the substrate 102.

The opacifying layers 103a and 103b are omitted across an area 101 which forms a window within which the security device 100 is located. As shown best in the cross-section of Figure 11b, the microstructures (shown generally at 25) are provided on one side of the transparent substrate 102, and a colour shifting layer 10 is provided on the opposite surface of the substrate. The microstructures 25 and colour shifting layer 10 are each as described above with respect to any of the disclosed embodiments, such that the device 100 displays a colour shift effect and first and second images in window 101 upon a change in viewing direction (an image of the letter "M" is depicted here as an example). As the device 100 is to be viewed in reflection it is desirable to use a substantially opaque colour shifting layer such as a printed ink comprising an optically variable pigment, although a partially transparent colour shifting layer may be used in conjunction with an absorbing element as described above.

It should be noted that in modifications of this embodiment the window 101 could be a half-window with the opacifying layer 103b continuing across all or part of the window over the security device 100.

Figure 12 shows such an example, although here the banknote 1000 is a conventional paper-based banknote provided with a security article 105 in the form of a security thread, which is inserted during paper-making such that it is partially embedded into the paper so that portions of the paper 104 lie on either side of the thread. This can be done using the techniques described in EP0059056 where paper is not formed in the window regions during the paper making process thus exposing the security thread in is incorporated between layers of the paper. The security thread 105 is exposed in window regions 101 of the banknote. Alternatively, the window regions 101 may for example be formed by abrading the surface of the paper in these regions after insertion of the thread. The security device is formed on the thread 105, which comprises arrays of transparent substrate microstructures 25 provided on one side and colour shifting layer 10 provided on the other.

If desired, several different security devices 100 could be arranged along the thread, with different or identical images displayed by each. In one example, a first window could contain a first device, and a second window could contain a second device, each having different microstructure arrays, so that the two windows display different images depending on the viewing direction.

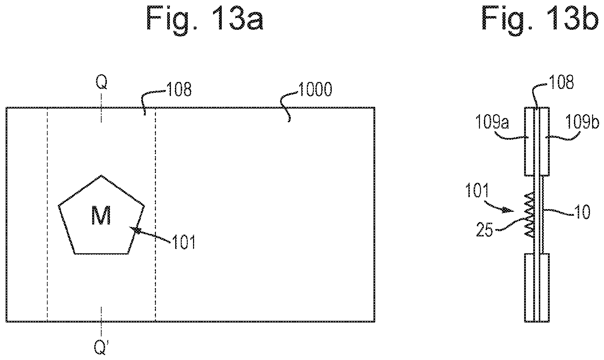

In Figure 13, the banknote 1000 is again a conventional paper-based banknote, provided with a strip element or insert 108. The strip 108 is based on a transparent substrate and is inserted between two plies of paper 109a and 109b. The security device is formed by microstructures 25 disposed on one side of the strip substrate, and a colour shifting layer 10 disposed on the opposing side. The paper plies 109a and 109b are apertured across region 101 to reveal the security device, which in this case may be present across the whole of the strip 108 or could be localised within the aperture region 101.

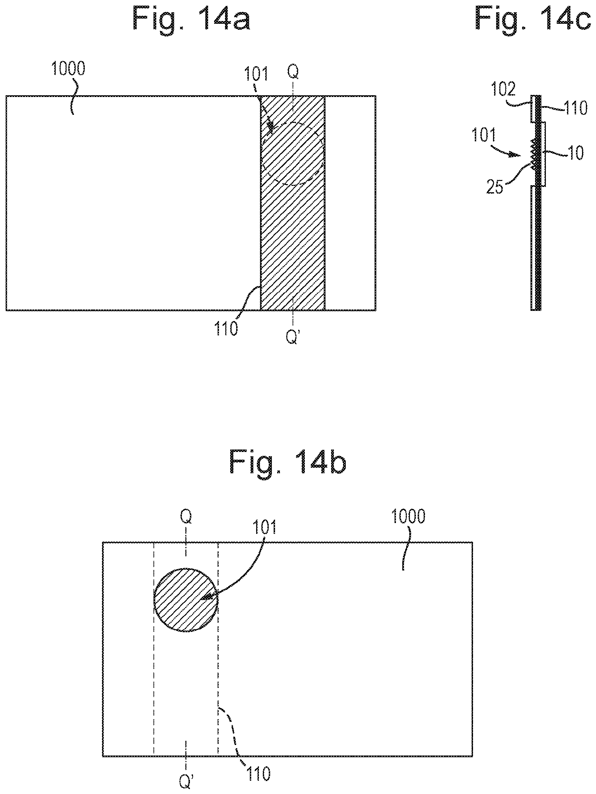

A further embodiment is shown in Figure 14 where Figures 14(a) and (b) show the front and rear sides of the document 1000 respectively, and Figure 14(c) is a cross section along line Q-Q'. Security article 110 is a strip or band comprising a security device according to any of the embodiments described above. The security article 110 is formed into a security document 1000 comprising a fibrous substrate 102, using a method described in EP-A-1141480. The strip is incorporated into the security document such that it is fully exposed on one side of the document (Figure 14(a)) and exposed in one or more windows 101 on the opposite side of the document (Figure 14(b)). Again, the security device is formed on the strip 110, which comprises a transparent substrate with microstructures 25 formed on one surface and colourshifting layer 10 formed on the other.

In Figure 14, the document of value 1000 is again a conventional paper-based banknote and again includes a strip element 110. In this case there is a single ply of paper. Alternatively a similar construction can be achieved by providing paper 102 with an aperture 101 and adhering the strip element 110 on to one side of the paper 102 across the aperture 101. The aperture may be formed during papermaking or after papermaking for example by die-cutting or laser cutting. Again, the security device is formed on the strip 110, which comprises a transparent substrate with microstructures 25 formed on one surface and colour shifting layer 10 formed on the other.

In the examples of Figures 11 to 14, the colour shifting element and the microstructures are described as being on opposing sides of a transparent substrate. However, in other examples they may be provided on the same side of the transparent substrate.

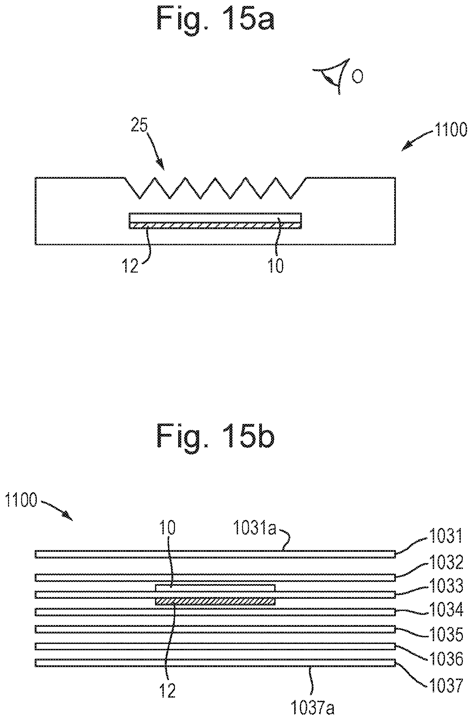

Figures 15a and 15b schematically illustrate how a security device 100 according to the invention may be incorporated into a substrate 1100 for a security document such as a plastic identity card or passport. Figure 15a is a schematic cross-sectional diagram of an example substrate 1100 for a security document. The substrate 1100 comprises a plurality of polymer layers that are joined together, typically by lamination (see Figure 15b). The substrate 1100 has a first outer surface 1031a and a second outer surface 1037a. The thickness of the substrate 1100, which is the distance between the first and second outer surfaces 31a, 37a, is preferably at least approximately 150µm and more preferably at least approximately 300µm. In particular, the substrate 1100 may be between approximately 300µm and 1000µm thick and, for example, may be approximately 800µm thick. The substrate 1100 may be substantially rigid or at least semi-rigid by virtue of its thickness and polymer (typically plastic) composition.

Within the substrate 1100 is a colour shifting layer 10 as described in any of the embodiments above. In this case the colour shifting layer 10 is partially transparent and a dark absorbing layer 12 is therefore utilised as described above. As will be understood, a substantially opaque colour shifting layer may alternatively be used.

First and second arrays of microstructures (shown generally at 25) are formed in the first outer surface 31a of the substrate 1100 so that they are positioned above and in register (i.e. aligned with) with the colour shifting element 10, such that light from the colour shifting element passes through the microstructures 25 before reaching the observer O.

Figure 15b schematically illustrates the structure of such a substrate 1100. As illustrated in Figure 13b, a plurality of typically planar self-supporting polymer layers 1031, 1032, 1033, 1034, 1035, 1036 and 1037 are provided in a (typically fully) overlapping manner. Layers 1031 and 1037 are first and second outer layers respectively, and the outer surface 1031a of the first outer layer defines the first outer surface 1031a of the substrate 1100, and similarly the outer surface 1037a of second outer surface 1037a defines the second outer surface of the substrate 1100. The first and second outer layers are typically substantially transparent.

As can be seen in Figure 15b, a plurality of internal layers 1032, 1033, 1034, 1035 and 1036 are provided positioned between the first and second outer layers 1031, 1037. For the purposes of this description, moving in a direction from the first ("top") outer layer 1031 to the second ("bottom") outer layer 1037, layer 1032 is the first internal layer, layer 1033 is the second internal layer, layer 1034 is the third internal layer, layer 1035 is the fourth internal layer and layer 1036 is the fifth internal layer.

A colour shifting layer 10 is provided on and in contact with a first surface the second internal layer 1033. Here the first surface is the uppermost surface of second internal layer 1033 and is the surface of second internal layer proximal the first outer layer 1031. The colour shifting layer may be provided on the second internal layer 1033 by a variety of methods, such as lamination, printing or sputtering via vacuum deposition which would typically be the case for the different layers of a thin film multilayer interference structure (in the case of optically variable pigments for example). Such a thin film interference structure forms a "colour shifting layer" for the purposes of this description.

For the case where the colour shifting layer is at least partially transparent, an absorbing element 12 is provided on and in contact with the second surface of the second internal layer 1033. Here the second surface is the bottommost surface of the second internal layer 1033 and is the surface of second internal layer distal the first outer layer 1031. In other embodiments the colour shifting layer and absorbing layer 12 may be provided on the same surface of internal layer 1033.

The first outer layer 1031 and the first internal layer 1032 are substantially transparent such that visible light can pass through them. This allows visible light to be incident to and reflected from the colour shifting layer 10 such that the colour shifting layer 10 is visible through the first outer layer 1031 and the first internal layer 1032. The second internal layer 1033 upon which the colour shifting layer 10 is positioned is also substantially transparent. In the case where an absorbing element is not required (for example where the colour shifting layer is substantially opaque, such as metal-dielectric multilayer thin films or a printed optically variable pigment), the second internal layer 1033 may be transparent or opaque. The third 1034, fourth 1035 and fifth 1036 internal layers are substantially opaque. In general the internal layers positioned between the colour shifting layer 10 and the first ("top") outer layer are substantially transparent (or at least have a substantially transparent region) such that the colour shifting layer 10 is visible through the top of the finished substrate and the optical variable effects of the colour shifting element are exhibited to a viewer. Typically the internal layers positioned between the colour shifting layer 10 and the second ("bottom") outer layer are substantially opaque. Furthermore, the substantially opaque internal layers may comprise marking additives such that they can be laser marked, as is known in the art.

Although in general the internal layers positioned between the colour shifting layer 10 and the first ("top") outer layer are substantially transparent, the colour shifting layer 10 may be viewable through a substantially transparent window region in a layer positioned between the colour shifting layer 10 and the first outer layer 1031.

The polymer layers are typically formed from a plastic material such as polycarbonate, polyethylene terephthalate (PET) or polyethylene terephthalate glycol-modified (PETG). Polycarbonate is particularly suitable due to its high durability and ease of manufacture. Each of the layers may be between approximately 30 and 200µm thick. Although in this example seven layers are shown, in other examples a different number of layers may be used.

The microstructure arrays are formed in at least the first outer layer 1031, and may be formed in the first outer layer 1031 and first internal layer 1032. This is typically performed by embossing, and may be carried out subsequent to lamination of the polymer layers, or substantially simultaneously with the lamination.

In other embodiments, the colour shifting layer may be inserted into a preformed polymer substrate by insertion of a "plug" containing the colour shifting layer into a corresponding aperture in the substrate.

## Claims

1. An optical device (100), comprising;
a colour shifting layer (10) that exhibits different colours dependent on the angle of incidence of incident light, and;
first and second arrays (20, 30) of at least partially transparent microstructures (25, 35) covering at least a part of the colour shifting layer and configured to modify the angle of light incident to, and reflected from, the colour shifting layer in order to generate a first optically variable effect, wherein;
said first array (20) of microstructures is arranged as a set of image elements (20-1, 20-2, 20-3) that cooperate to exhibit a first image, and;
said second array (30) of microstructures is arranged as a set of image elements (30-1, 30-2, 30-3) that cooperate to exhibit a second image, wherein;
the image elements of the first array are interlaced with the image elements of the second array, and further wherein;
the microstructures (25, 35) of the first and second arrays (20, 30) have at least one face (27) that reflects incident light, whereby the microstructures of the first array (20) are configured such that, when viewed along a first viewing direction the optical device (100) exhibits the first image, and the microstructures of the second array (30) are configured such that, when viewed along a second viewing direction the optical device (100) exhibits the second image, wherein when viewed along the first viewing direction the microstructures of the first array (20) appear brighter than their surroundings such that the optical device (100) exhibits the first image, and when viewed along the second viewing direction the microstructures of the second array (30) appear brighter than their surroundings such that the optical device (100) exhibits the second image.

2. The optical device of claim 1, wherein the first optically variable effect is a colour shift effect exhibited when the device is tilted about an axis substantially parallel with the plane of the device relative to an observer.

3. The optical device of any of the preceding claims, wherein each microstructure comprises at least one planar or curved face which makes a facet angle of more than zero degrees and less than or equal to 90 degrees with the plane of the colour shifting layer, preferably wherein said at least one planar or curved face reflects incident light.

4. The optical device of any of the preceding claims, wherein the microstructures of the first and second arrays have different orientations in the plane of the device such that when viewed along the first viewing direction the optical device exhibits the first image and when viewed along the second viewing direction the optical device exhibits the second image.

5. The optical device of any of the preceding claims, wherein each microstructure of the first array has a primary axis orientated in a first direction lying in the plane of the optical device and each microstructure of the second array has a primary axis orientated in a second direction lying in the plane of the optical device, and wherein the first and second directions are offset, preferably wherein an angle between the first and second directions is greater than 0 degrees and less than 180 degrees, preferably 90 degrees.

6. The optical device of claim 5, wherein each microstructure is elongate and the primary axis is parallel to the direction of elongation.

7. The optical device of any of the preceding claims, wherein the microstructures of at least one of the arrays are prisms and preferably have a cross-section which is a triangle, a trapezium, an arch, a circular segment or an elliptical segment.

8. The optical device of any of the preceding claims, wherein the microstructures of at least one of the arrays are substantially pyramidal.

9. The optical device of any of claims 5 to 8, wherein the first and second viewing directions are substantially perpendicular to the primary axes of the microstructures of the respective arrays.

10. The optical device of any of the preceding claims, wherein the microstructures of the first array are configured such that the first image is exhibited when the device is viewed along the first viewing direction, and the microstructures of the second array are configured such that the second image is exhibited when the device is viewed along said first viewing direction and along the second viewing direction, preferably wherein the first and second images complement each other, preferably wherein the first and second images in combination exhibit a further image, and more preferably wherein the microstructures of the first array are prisms, and the microstructures of the second array are pyramidal structures.

11. The optical device of any of the preceding claims, wherein each image element of the first array of microstructures is not discernible to the naked human eye, and each image element of the second array of microstructures is not discernible to the naked human eye.

12. The optical device of any of the preceding claims, wherein at least one of the first and second images defines indicia, preferably a letter, digit, geometric shape, symbol, graphic or alphanumerical text.

13. The optical device of any of the preceding claims, wherein the optical device is a security device.

14. A security document comprising an optical device according to claim 13, wherein the security document is formed as a banknote, cheque, passport, identity card, certificate of authenticity, fiscal stamp or another document for securing value or personal identity.

15. A method of forming an optical device (100), comprising;
providing a colour shifting layer (10) that exhibits different colours dependent on the angle of incidence of incident light, and;
providing first and second arrays (20, 30) of at least partially transparent microstructures (25) covering at least a part of the colour shifting layer and configured to modify the angle of light incident to, and reflected from, the colour shifting layer in order to generate a first optically variable effect, wherein;
said first array (20) of microstructures is arranged as a set of image elements (20-1, 20-2, 20-3) that cooperate to exhibit a first image, and;
said second array (30) of microstructures is arranged as a set of image elements (30-1, 30-2, 30-3) that cooperate to exhibit a second image, wherein;
the image elements of the first array are interlaced with the image elements of the second array, and further wherein;
the microstructures (25, 35) of the first and second arrays (20, 30) have at least one face (27) that reflects incident light, whereby the microstructures of the first array (20) are configured such that, when viewed along a first viewing direction the optical device (100) exhibits the first image, and the microstructures of the second array (30) are configured such that, when viewed along a second viewing direction the optical device (100) exhibits the second image, wherein when viewed along the first viewing direction the microstructures of the first array (20) appear brighter than their surroundings such that the optical device (100) exhibits the first image, and when viewed along the second viewing direction the microstructures of the second array (30) appear brighter than their surroundings such that the optical device (100) exhibits the second image.

## Patentansprüche

1. Optische Vorrichtung (100), umfassend:
Eine farbverschiebende Schicht (10), die, abhängig vom Einfallswinkel des einfallenden Lichts, verschiedene Farben zeigt, und;
erste und zweite Arrays (20, 30) von wenigstens teilweise transparenten Mikrostrukturen (25, 35), die wenigstens einen Teil der farbverschiebenden Schicht bedecken und ausgelegt sind, den Winkel des, auf die farbverschiebende Schicht einfallenden und davon reflektierten, Lichts zu modifizieren, um einen ersten optisch variablen Effekt zu generieren, wobei;
das erste Array (20) von Mikrostrukturen als ein Satz von Bildelementen (20-1, 20-2, 20-3) eingerichtet ist, die kooperieren, um ein erstes Bild zu zeigen, und;
das zweite Array (30) von Mikrostrukturen als ein Satz von Bildelementen (30-1, 30-2, 30-3) eingerichtet ist, die kooperieren, um ein zweites Bild zu zeigen, wobei;
die Bildelemente des ersten Arrays mit den Bildelementen des zweiten Arrays verschachtelt sind, und ferner wobei;
die Mikrostrukturen (25, 35) der ersten und zweiten Arrays (20, 30) wenigstens eine Fläche (27) aufweisen, die einfallendes Licht reflektiert, wobei die Mikrostrukturen des ersten Arrays (20) derart ausgelegt sind, dass, wenn entlang einer ersten Betrachtungsrichtung betrachtet, die optische Vorrichtung (100) das erste Bild zeigt, und die Mikrostrukturen des zweiten Arrays (30) derart ausgelegt sind, dass, wenn entlang einer zweiten Betrachtungsrichtung betrachtet, die optische Vorrichtung (100) das zweite Bild zeigt, wobei, wenn entlang der ersten Betrachtungsrichtung betrachtet, die Mikrostrukturen des ersten Arrays (20) derart heller als ihre Umgebungen erscheinen, das die optische Vorrichtung (100) das erste Bild zeigt, und wenn entlang der zweiten Betrachtungsrichtung betrachtet, die Mikrostrukturen des zweiten Arrays (30) derart heller als ihre Umgebungen erscheinen, dass die optische Vorrichtung (100) das zweite Bild zeigt.

2. Optische Vorrichtung nach Anspruch 1, wobei der erste optisch variable Effekt ein Effekt von Farbverschiebung ist, der angezeigt wird, wenn die Vorrichtung um eine Achse geneigt wird, die wesentlich parallel mit der Ebene der Vorrichtung relativ zu einem Betrachter ist.

3. Optische Vorrichtung nach irgendeinem der vorhergehenden Ansprüche, wobei jede Mikrostruktur wenigstens eine planare oder gekrümmte Fläche umfasst, die einen Facettenwinkel von mehr als null Grad und weniger als oder gleich 90 Grad mit der Ebene der farbverschiebenden Schicht macht, vorzugsweise wobei die wenigstens eine planare oder gekrümmte Fläche einfallendes Licht reflektiert.

4. Optische Vorrichtung nach irgendeinem der vorhergehenden Ansprüche, wobei die Mikrostrukturen der ersten und zweiten Arrays verschiedene Orientierungen in der Ebene der Vorrichtung derart aufweisen, dass, wenn entlang der ersten Betrachtungsrichtung betrachtet, die optische Vorrichtung das erste Bild zeigt und, wenn entlang der zweiten Betrachtungsrichtung betrachtet, die optische Vorrichtung das zweite Bild zeigt.

5. Optische Vorrichtung nach irgendeinem der vorhergehenden Ansprüche, wobei jede Mikrostruktur des ersten Arrays eine primäre Achse aufweist, die in eine erste Richtung orientiert ist, die in der Ebene der optischen Vorrichtung liegt und jede Mikrostruktur des zweiten Arrays eine primäre Achse aufweist, die in eine zweite Richtung orientiert ist, die in der Ebene der optischen Vorrichtung liegt, und wobei die ersten und zweiten Richtungen versetzt sind, vorzugsweise wobei ein Winkel zwischen den ersten und zweiten Richtungen größer als 0 Grad und geringer als 180 Grad, vorzugsweise 90 Grad ist.

6. Optische Vorrichtung nach Anspruch 5, wobei jede Mikrostruktur länglich ist und die primäre Achse parallel zur Längsrichtung ist.

7. Optische Vorrichtung nach irgendeinem der vorhergehenden Ansprüche, wobei die Mikrostrukturen von wenigstens einem der Arrays Prismen sind und vorzugsweise einen Querschnitt aufweisen, der ein Dreieck, ein Trapez, ein Bogen, ein kreisförmiges Segment oder ein elliptisches Segment ist.

8. Optische Vorrichtung nach irgendeinem der vorhergehenden Ansprüche, wobei die Mikrostrukturen von wenigstens einem der Arrays wesentlich pyramidenförmig sind.

9. Optische Vorrichtung nach irgendeinem der Ansprüche 5 bis 8, wobei die ersten und zweiten Betrachtungsrichtungen wesentlich senkrecht zu den primären Achsen der Mikrostrukturen der jeweiligen Arrays sind.

10. Optische Vorrichtung nach irgendeinem der vorhergehenden Ansprüche, wobei die Mikrostrukturen des ersten Arrays derart ausgelegt sind, dass das erste Bild gezeigt wird, wenn die Vorrichtung entlang einer ersten Betrachtungsrichtung betrachtet wird, und die Mikrostrukturen des zweiten Arrays derart ausgelegt sind, dass das zweite Bild gezeigt wird, wenn die Vorrichtung entlang der ersten Betrachtungsrichtung und entlang der zweiten Betrachtungsrichtung betrachtet wird, vorzugsweise wobei die ersten und zweiten Bilder einander komplementieren, vorzugsweise wobei die ersten und zweiten Bilder in Kombination ein weiteres Bild zeigen, und noch bevorzugter wobei die Mikrostrukturen des ersten Arrays Prismen sind und die Mikrostrukturen des zweiten Arrays pyramidenförmige Strukturen sind.

11. Optische Vorrichtung nach irgendeinem der vorhergehenden Ansprüche, wobei jedes Bildelement des ersten Arrays von Mikrostrukturen mit bloßem menschliche Auge nicht erkennbar ist, und jedes Bildelement des zweiten Arrays von Mikrostrukturen mit bloßem menschlichen Auge nicht erkennbar ist.

12. Optische Vorrichtung nach irgendeinem der vorhergehenden Ansprüche, wobei die ersten und zweiten Bilder Zeichen, vorzugsweise einen Buchstaben, eine Ziffer, eine geometrische Form, ein Symbol, eine Grafik oder einen alphanumerischen Text zu definieren.

13. Optische Vorrichtung nach irgendeinem der vorhergehenden Ansprüche, wobei die optische Vorrichtung eine Sicherheitsvorrichtung ist.

14. Sicherheitsdokument, das eine optische Vorrichtung nach Anspruch 13 umfasst, wobei das Sicherheitsdokument als eine Banknote, ein Scheck, ein Reisepass, ein Personalausweis, ein Echtheitszertifikat, eine Fiskalmarke oder ein sonstiges Dokument von Sicherheitswert oder Personalidentität geformt ist.

15. Verfahren zur Herstellung einer optischen Vorrichtung (100), umfassend;
Bereitstellen einer farbverschiebenden Schicht (10), die, in Abhängigkeit vom Einfallswinkel des einfallenden Lichts, verschiedene Farben zeigt, und;
Bereitstellen erster und zweiter Arrays (20, 30) von wenigstens teilweise transparenten Mikrostrukturen (25), die wenigstens einen Teil der farbverschiebenden Schicht bedecken und ausgelegt sind, den Winkel des, auf die farbverschiebende Schicht einfallenden und davon reflektierten, Lichts zu modifizieren, um einen ersten optisch variablen Effekt zu generieren, wobei;
das erste Array (20) von Mikrostrukturen als ein Satz von Bildelementen (20-1, 20-2, 20-3) eingerichtet ist, die kooperieren, um ein erstes Bild zu zeigen, und;
das zweite Array (30) von Mikrostrukturen als ein Satz von Bildelementen (30-1, 30-2, 30-3) eingerichtet ist, die kooperieren, um ein zweites Bild zu zeigen, wobei;
die Bildelemente des ersten Arrays mit den Bildelementen des zweiten Arrays verschachtelt sind, und ferner wobei;
die Mikrostrukturen (25, 35) der ersten und zweiten Arrays (20, 30) wenigstens eine Fläche (27) aufweisen, die einfallendes Licht reflektiert, wobei die Mikrostrukturen des ersten Arrays (20) derart ausgelegt sind, dass, wenn entlang einer ersten Betrachtungsrichtung betrachtet, die optische Vorrichtung (100) das erste Bild zeigt, und die Mikrostrukturen des zweiten Arrays (30) derart ausgelegt sind, dass, wenn entlang einer zweiten Betrachtungsrichtung betrachtet, die optische Vorrichtung (100) das zweite Bild zeigt, wobei, wenn entlang der ersten Betrachtungsrichtung betrachtet, die Mikrostrukturen des ersten Arrays (20) derart heller als ihre Umgebungen erscheinen, dass die optische Vorrichtung (100) das erste Bild zeigt, und wenn entlang der zweiten Betrachtungsrichtung betrachtet, die Mikrostrukturen des zweiten Arrays (30) derart heller als ihre Umgebungen erscheinen, dass die optische Vorrichtung (100) das zweite Bild zeigt.

## Revendications

1. Dispositif optique (100) comprenant :
une couche à variation chromatique (10) présentant différentes couleurs en fonction de l'angle d'incidence de la lumière incidente ; et
des premier et deuxième réseaux (20, 30) de microstructures au moins partiellement transparentes (25, 35) couvrant au moins une partie de la couche à variation chromatique, et configurés pour modifier l'angle de lumière incidente sur la couche à variation chromatique, et reflétée par celle-ci, de façon à générer un premier effet optiquement variable,
ledit premier réseau (20) de microstructures étant agencé comme un jeu d'éléments d'images (20-1, 20-2, 20-3) coopérant pour présenter une première image, et ;
ledit deuxième réseau (30) de microstructures étant agencé comme un jeu d'éléments d'images (30-1, 30-2, 30-3) coopérant pour présenter une deuxième image,
les éléments d'images du premier réseau étant entrelacés avec les éléments d'images du deuxième réseau, et, de plus,
les microstructures (25, 35) des premier et deuxième réseaux (20, 30) présentant au moins une face (27) reflétant la lumière incidente, les microstructures du premier réseau (20) étant configurées de sorte que, lors de leur visualisation le long d'une première direction de visualisation, le dispositif optique (100) présente la première image, et les microstructures du deuxième réseau (30) étant configurées de sorte que, lors de leur visualisation le long d'une deuxième direction de visualisation, le dispositif optique (100) présente la deuxième image, lors de leur visualisation le long de la première direction de visualisation, les microstructures du premier réseau (20) apparaissant plus lumineuses que leur milieu, de sorte que le dispositif optique (100) présente la première image, et lors de leur visualisation le long de la deuxième direction de visualisation, les microstructures du deuxième réseau (30) apparaissant plus lumineuses que leur milieu, de sorte que le dispositif optique (100) présente la deuxième image.

2. Dispositif optique selon la revendication 1, le premier effet optiquement variable étant un effet de variation chromatique présenté lors de l'inclinaison du dispositif autour d'un axe substantiellement parallèle au plan du dispositif relativement à un observateur.

3. Dispositif optique selon une quelconque des revendications précédentes, chaque microstructure comprenant au moins une face plane ou courbe formant un angle de facette supérieur à zéro degré et inférieur ou égal à 90 degrés avec le plan de la couche à variation chromatique, de préférence ladite au moins une face plane ou courbe reflétant la lumière incidente.

4. Dispositif optique selon une quelconque des revendications précédentes, les microstructures des premier et deuxième réseaux présentant différentes orientations dans le plan du dispositif de sorte que lors de sa visualisation le long de la première direction, le dispositif optique présente la première image, et lors de sa visualisation le long de la deuxième direction, le dispositif optique présente la deuxième image.

5. Dispositif optique selon une quelconque des revendications précédentes, chaque microstructure du premier réseau possédant un axe primaire orienté dans une première direction située dans le plan du dispositif optique, et chaque microstructure du deuxième réseau possédant un axe primaire orienté dans une deuxième direction située dans le plan du dispositif optique, et les première et deuxième directions étant décalées, de préférence un angle entre les première et deuxième directions étant supérieur à 0 degrés, inférieur à 180 degrés, et de préférence égal à 90 degrés.

6. Dispositif optique selon la revendication 5, chaque microstructure étant allongée, et l'axe primaire étant parallèle à la direction de l'allongement.

7. Dispositif optique selon une quelconque des revendications précédentes, les microstructures d'au moins un des réseaux étant des prismes, et présentant de préférence une section transversale qui est un triangle, un trapèze, un arc, un segment circulaire, ou un segment elliptique.

8. Dispositif optique selon une quelconque des revendications précédentes, les microstructures d'au moins un des réseaux étant substantiellement pyramidales.

9. Dispositif optique selon une quelconque des revendications 5 à 8, les première et deuxième directions de visualisation étant substantiellement perpendiculaires aux axes primaires des microstructures des réseaux respectifs.

10. Dispositif optique selon une quelconque des revendications précédentes, les microstructures du premier réseau étant configurées de sorte que la première image soit présentée lors de la visualisation du dispositif le long de la première direction de visualisation, et les microstructures du deuxième réseau étant configurées de sorte que la deuxième image soit présentée lors de la visualisation du dispositif le long de ladite première direction de visualisation et le long de la deuxième direction de visualisation, de préférence les première et deuxième images se complétant, de préférence les première et deuxième images combinées présentant une autre image, et mieux encore, les microstructures du premier réseau étant des prismes, et les microstructures du deuxième réseau étant des structures pyramidales.

11. Dispositif optique selon une quelconque des revendications précédentes, chaque élément d'image du premier réseau de microstructures n'étant pas visible à l'oeil nu de l'homme, et chaque élément d'image du deuxième réseau de microstructures n'étant pas visible à l'oeil nu de l'homme.

12. Dispositif optique selon une quelconque des revendications précédentes, au moins une des première et deuxième images définissant des indices, de préférence une lettre, un chiffre, une forme géométrique, un symbole, un graphique, ou un texte alphanumérique.

13. Dispositif optique selon une quelconque des revendications précédentes, le dispositif optique étant un dispositif de sécurité.

14. Document de sécurité comprenant un dispositif optique selon la revendication 13, le document de sécurité se présentant sous forme de billet de banque, de chèque, de passeport, de carte d'identité, de certificat d'authenticité, de timbre fiscal, ou de tout autre document sécurisant des valeurs ou une identité personnelle.

15. Procédé de réalisation d'un dispositif optique (100), comprenant :
l'agencement d'une couche à variation chromatique (10) présentant différentes couleurs en fonction de l'angle d'incidence de la lumière incidente ; et
l'agencement de premier et deuxième réseaux (20, 30) de microstructures au moins partiellement transparentes (25) couvrant au moins une partie de la couche à variation chromatique, et configurés pour modifier l'angle de lumière incidente sur la couche à variation chromatique, et reflétée par celle-ci, de façon à générer un premier effet optiquement variable,
ledit premier réseau (20) de microstructures étant agencé comme un jeu d'éléments d'images (20-1, 20-2, 20-3) coopérant pour présenter une première image, et ;
ledit deuxième réseau (30) de microstructures étant agencé comme un jeu d'éléments d'images (30-1, 30-2, 30-3) coopérant pour présenter une deuxième image,
les éléments d'images du premier réseau étant entrelacés avec les éléments d'images du deuxième réseau, et, de plus,
les microstructures (25, 35) des premier et deuxième réseaux (20, 30) présentant au moins une face (27) reflétant la lumière incidente, les microstructures du premier réseau (20) étant configurées de sorte que, lors de leur visualisation le long d'une première direction de visualisation, le dispositif optique (100) présente la première image, et les microstructures du deuxième réseau (30) étant configurées de sorte que, lors de leur visualisation le long d'une deuxième direction de visualisation, le dispositif optique (100) présente la deuxième image, lors de leur visualisation le long de la première direction de visualisation, les microstructures du premier réseau (20) apparaissant plus lumineuses que leur milieu, de sorte que le dispositif optique (100) présente la première image, et lors de leur visualisation le long de la deuxième direction de visualisation les microstructures du deuxième réseau (30) apparaissant plus lumineuses que leur milieu, de sorte que le dispositif optique (100) présente la deuxième image.
